# EUROPEAN PATENT SPECIFICATION

(11) **EP 2 926 487 B1**
(45) Date of publication and mention of the grant of the patent: **25.12.2019**
(21) Application number: 14705163.5
(22) Date of filing: 18.02.2014
(51) Int. Cl.: H04L 1/00, H04L 1/18

(54) **RECEIVER AND METHOD FOR DECODING DATA PACKETS**
EMPFÄNGER UND VERFAHREN ZUR DECODIERUNG VON DATENPAKETEN
RÉCEPTEUR ET PROCÉDÉ DE DÉCODAGE DE PAQUETS DE DONNÉES

(43) Date of publication of application: 07.10.2015
(73) Proprietor: Huawei Technologies Co., Ltd., Longgang District Shenzhen, Guangdong 518129 (CN)
(72) Inventor: SHILO, Shimi, 80992 Munich (DE); WEITZMAN, Avi, 80992 Munich (DE); EZRI, Doron, 80992 Munich (DE); RUAN, Wei, 80992 Munich (DE); SUN, Fuqing, 80992 Munich (DE); FAN, Ronghu, 80992 Munich (DE)
(74) Representative: Kreuz, Georg Maria
(86) International application number: PCT/EP2014/053089
(87) International publication number: WO 2015/124167

(56) References cited:
- EP-A2- 1 843 503
- US-A1- 2003 177 429
- US-A1- 2006 039 325
- US-A1- 2012 198 305

## Description

### TECHNICAL FIELD

The present invention relates to a receiver and a method for decoding data packets. In particular, the receiver and the method of the present invention are able to combine soft values of a received data packet with soft values of one or more previously received corrupted versions of the same data packet, in order to determine a valid data packet.

### BACKGROUND

Data packets transmitted in wireless networks may be incorrectly decoded at a receiver, because of being corrupted due to detrimental effects of the wireless channel. Usually, a Cyclic Redundancy Check (CRC) is added to the bits of a transmitted data packet, and the receiver checks the validity of the received CRC. An invalid CRC means that the data packet was corrupted, and thus incorrectly decoded.

In the state of the art several mechanisms are used, in order to detect and correct errors in transmitted data packets. For example, Forward Error Correction (FEC) is known, for which redundant information is added to the information bits of a data packet to be transmitted. Further, Automatic Repeat Request (ARQ) is known, for which the transmitter requires an acknowledgement message from the receiver upon successful decoding of a data packet. If a transmitted data packet is not correctly decoded at the receiver, the transmitter is requested to retransmit the data packet.

Also a Hybrid Automatic Repeat Request (HARQ) mechanism is known from the state of the art. In the HARQ mechanism, an ARQ error control mechanism is used on top of an FEC mechanism. When the FEC output is erroneous, and thus results in a CRC error, the ARQ mechanism sends a negative acknowledgement message to the transmitter, which in response retransmits the data packet. A more sophisticated HARQ mechanism is also known as HARQ with soft combining. This mechanism further stores incorrectly decoded data packets, for example, log-likelihood ratio (LLR) values respective to these data packets, and then combines the stored LLR values with LLR values respective to retransmissions of the same data packet. Thereby, the probability for a correct decoding of data packets is increased.

However, in order to support this sophisticated HARQ mechanism, the receiver needs to allocate memory, in order to store the LLR values of previous transmissions of data packets. The receiver also needs to identify the source of the transmission, i.e. the transmitter of a data packet, before combing the data packet with previous transmissions. The receiver also needs to validate itself as the intended destination of the data packet transmission. Finally, for some special cases of the sophisticated HARQ mechanism, the receiver needs to know, which part of the information and parity bits were transmitted, so that it knows which parts to combine. The transmitter of a data packet needs to indicate, whether a transmission of a data packet is a new transmission or a retransmission.

Unfortunately, the 802.11 standard does not explicitly support HARQ or the more sophisticated HARQ. In the 802.11 standard a single CRC protects the MAC header and the pay load of a data packet. The MAC header usually contains the source and destination addresses for the data packet. Therefore, in case of a CRC error, the receiver cannot know, whether the transmission was really intended for it. Furthermore, in the case of a CRC error, it is difficult for the receiver to know, who transmitted the data packet. It is also difficult for the receiver to differentiate between collisions (which occur, for example, due to hidden nodes), and decoding errors of the data packet. Thus, the receiver may not know for certain that the LLR values reflect the true channel conditions. Finally, the 802.11 standard does not support HARQ-related messages and headers, such as indicating a new transmission or retransmission, a redundancy version, a HARQ reset, etc.

US 2006/039325 A1 discloses a method for decoding signalling messages on Flexible Layer One (FLO) half rate channels, where soft values of blocks that are incorrectly received are stored in a buffer. When the cyclic redundancy check (CRC) data of a received block fails, the soft values of the block are stored along with the first half of a signalling message so as to facilitate soft combining. The information from the first half of a signalling message that is used in the combination is the first radio packet for which the TFCI is a signalling TFCI, i.e., its value is 0. As a result, a misread of the first and second TFCI of a signalling message can occur without adversely affecting the decoding of a transmitted radio packet.

### SUMMARY

In view of the above mentioned problems, particularly the problem of corrupted data packets and the missing support for HARQ in the 802.11 standard, the present invention aims to improve the state of the art. Therefore, the present invention has the object to provide a receiver and a method for implementing a HARQ mechanism without any modifications to the 802.11 standard or to the transmitter. In particular, the present invention intends to provide the receiver with means to identify, in case of a CRC fail, the transmitter of a data packet, and to identify, whether the data packet is a retransmission, even if a request to send (RTS) / clear to send (CTS) method is not used between transmitter and receiver. Further, the present invention aims to provide the receiver with means to detect collisions and/or interferences, in order to improve its performance.

The above-mentioned object of the present invention is achieved by the solution provided in the enclosed independent claims. Advantageous implementations of the present invention are further defined in the respective dependent claims. In particular, according to the claimed method and receiver, a HARQ mechanism may be implemented for use in the 802.11 standard, without any modifications to the standard or the transmitter.

A first aspect of the present invention provides a receiver for decoding data packets, the receiver comprising a receiving unit, configured to receive a data packet, the data packet containing a MAC header, a soft decoder, configured to soft decode the data packet to obtain soft values of the data packet, an error checking module, configured to perform a cyclic redundancy check, CRC, based on the soft values of the data packet, a hard decoder configured to perform, if the CRC based on the soft values of the data packet failed, a first hard decision on the soft values of the data packet corresponding to the MAC header of the data packet, and a controller configured to, based on the result of the first hard decision, determine whether soft values of a previous transmission of the data packet are stored in a memory of the receiver and to combine said stored soft values with the soft values of the data packet to obtain combined soft values and wherein the error checking module is further configured to perform a CRC based on the combined soft values.

By performing a hard decision on the soft values of the data packet in case of a CRC error, the information in the respective fields of the MAC header of the data packet (i.e. the source address, target address, retry field, etc.) can be obtained. Thus, information concerning the transmitter of the data packet can be gathered, and also information about whether the transmission was intended for the receiver or not. By evaluating the retry field of the MAC header it can also be obtained, whether the transmitted data packet is a new transmission or a retransmission. Accordingly, it is possible for the receiver to check, if the memory contains soft values from previous transmissions for this specific data packet. As a consequence, the controller of the receiver is able to combine the soft values of the currently transmitted data packet with soft values of one or more previous transmission of the data packet, so that the probability of decoding the data packet correctly is significantly improved. The receiver of the present invention enables particularly the use of the HARQ mechanism in the 802.11 standard, without making any modifications to the 802.11 standard or to the transmitter of the data packet necessary.

In the present application the result of a hard decision is typically understood as stream of bits where each bit is considered definitely one or zero based on a threshold comparison inside the hard decoder. As an example, if a soft value is greater than the threshold it is considered to be definitely a one regardless of how close it is to the threshold. If it is less, it is definitely zero.

Soft decision decoding generates a stream of 'soft bits' or soft values such that for each bit, the soft bit represents how likely it is that the bit is one or how likely it is zero. As an example, the soft bit may be the computed LLR of each bit.

In a first implementation form of the receiver according to the first aspect, the controller is configured to identify a transmitter of the data packet, and the controller is configured to perform the determination whether soft values of a previous transmission of the data packet are stored in a memory of the receiver based on the hard decision if the transmitter cannot be identified by the controller and otherwise based on the result of the identification of the transmitter.

The receiver of the present invention preferably supports the RTS/CTS, and can thus identify a transmitter, i.e. if the transmitter also uses RTS/CTS. Otherwise, if RTS/CTS are not enabled, by using the hard decoder, the receiver is nevertheless able to obtain information (e.g. the identity) of the transmitter of the data packet to determine if previous soft values for this data packet are already stored in the memory of the receiver. Thus, regardless of RTC/CTS enabled or disabled, the receiver may find previously stored soft values of the same data packet.

In a second implementation form of the receiver according to the first implementation form of the first aspect, the hard decoder is configured to perform the hard decision on the soft values if the transmitter cannot be identified and otherwise to omit performing the hard decision.

Thereby, the hard decision is only performed when necessary, and as a consequence the receiver may operate more efficiently and faster.

In a third implementation form of the receiver according to the first aspect as such or according to the second implementation form of the first aspect, the controller is configured to store the soft values of the data packet in the memory, if no soft value combination passes the CRC which is based on the combined soft values.

Thus, for each transmission of a corrupted data packet, further soft values are stored, thereby further increasing the likelihood of a correct decoding of the data packet at the next retransmission.

In a fourth implementation form of the receiver according to the first aspect as such or according to any of the previous implementation forms of the first aspect, the controller is configured to request a retransmission of the data packet, if no soft value combination passes the CRC which is based on the combined soft values.

In other words, the receiver employs the ARQ mechanism, which ensures that data packets are retransmitted until they are correctly decoded.

In a fifth implementation form of the receiver according to the first aspect as such or according to any of the previous implementation forms of the first aspect, the soft values are log-likelihood ratios, LLRs, or equalized symbols.

In a sixth implementation form of the receiver according to the fifth implementation form of the first aspect, the controller is configured to use LLR combining, if the soft values are LLRs, or to use maximum ratio combining, MRC, or equal gain combining, EGC, if the soft values are equalized symbols, to combine the soft values of the data packet with the stored soft values of the previous transmission of the data packet.

LLR values are known from the state of the art, and enable LLR combining, in order to increase the likelihood of correctly decoding the data packet. As an alternative to LLR combining, the combining of the equalized symbols may be carried out. Equalized symbols are noisy constellation points at the output of the equalization step. In this case, old equalized symbols and the respective channel gains are preferably stored in the memory. When a retransmission of a data packet occurs, the old equalized symbols are combined with new equalized symbols. The combining method of equalized symbols may, for example, be maximum ratio combining (MRC), equal gain combining (EGC), etc.

In a seventh implementation form of the receiver according to the fifth or sixth implementation forms of the first aspect, the soft decoder is configured to obtain LLRs corresponding to pay load bits of the data packet and LLRs corresponding to parity bits of the data packet, if the soft values are LLRs, and the hard decoder is configured to perform the first hard decision on the LLRs corresponding to the pay load bits and the LLRs corresponding to the parity bits.

In this way, decoded bits corresponding to the MAC header may be checked against the hard decision (i.e. the sign) of the coded LLRs stored in the memory. The soft decoder is thus configured contrary to the configuration of commonly used soft decoders, which are configured to only output LLRs corresponding to pay load bits.

In an eighth implementation form of the receiver according to the first aspect as such or according to any of the previous implementation forms of the first aspect, the controller is configured to parse the result of the first hard decision to determine at least a source address and a target address contained in the MAC header of the data packet, wherein the controller is further configured to decide that soft values of a previous transmissions of the data packet are stored in the memory if the determined source address and target address match a source address and a target address of a data packet soft values of which are already stored in the memory.

Thereby, the receiver of the present invention is able to efficiently and reliably use a combination of soft values, in order to increase the likelihood of correctly decoding a data packet, even if RTS/CTS is not used.

In a ninth implementation form of the receiver according to the first aspect as such or according to any of the previous implementation forms, the hard decoder is configured to perform a second hard decision on the stored soft values, and the controller is configured to compare the result of the first hard decision with the result of the second hard decision, and to decide that stored soft values belong to a previous transmission of the data packet, if the results of the first hard decision and the second hard decision match.

In a tenth implementation form of the receiver according to the ninth implementation form of the first aspect, the controller is configured to parse the result of the first hard decision, in order to determine at least a value of a retry field contained in the MAC header of the data packet, and to decide that stored soft values belong to a previous transmission of the data packet, if the results of the first hard decision and the second hard decision match, and if the value of the retry field indicates a retransmission.

In other words, the receiver is able to determine, whether the data packet is a new transmission or a retransmission, and to perform the soft value combination only if the data packet is a retransmission. Thus, the receiver may operate more efficiently and faster.

In an eleventh implementation form of the receiver according to the first aspect as such or according to any of the previous implementation forms of the first aspect, the receiver further comprises a detecting unit for detecting, whether a collision with an interfering data packet occurred while receiving the data packet, wherein the controller is configured to use only soft values of the data packet corresponding to symbols of the data packet, during which no collision is detected for combining the soft values of the data packet with the stored soft values.

Collisions with other data packets occur mainly due to hidden nodes, and can occur anywhere within a data packet (not necessarily only at the beginning of a data packet). If a "late" collision occurs, it is beneficial to refrain from combining some or even all of the LLR values from the current data packet with LLRs from previous transmissions, in order to get better results and a higher likelihood of correctly decoding the data packet.

In a twelfth implementation form of the receiver according to the eleventh implementation form of the first aspect, the detecting unit is configured to decide that the collision occurred in a symbol of the data packet, if pilot subcarriers in the symbol change with a rate which exceeds a pre-defined threshold.

The pilot subcarriers are typically spread in time and frequency, respectively, and are used for frequency offset estimation. After multiplication at the receiver by a Pseudo Random Binary Sequence (PRBS), the receiver can use the pilot subcarriers to estimate, if a collision occurs. Thereby, the receiver can determine if all or only some of the soft values should be combined with the soft values of previous transmissions. Thereby, the likelihood of decoding a packet correctly may be increased. Detecting collisions by the pilot subcarriers changing slowly or rapidly provides a simple and fast mechanism.

In a thirteenth implementation form of the receiver according to the first aspect as such or according to any of the previous implementation forms of the first aspect, the controller is configured to determine a direction from which an interfering data packet is transmitted, and to apply a beam forming pattern in dependence on the determined direction to one or more antennas of the receiving unit, e.g. in order to suppress (or at least reduce) the interference caused by the interfering data packet.

By suppressing the interference caused by the interfering data packets, the performance of the receiver may be improved. In particular, the combination of the HARQ mechanism with applying a beam forming pattern to one or more antennas significantly increases the performance.

In a fourteenth implementation form of the receiver according to the ninth or tenth implementation form and the thirteenth implementation form the controller is configured to apply the beam forming pattern to the one or more antennas during each symbol of the data packet, for which a collision with an interfering data packet is detected.

In a fifteenth implementation form of the receiver according to the first aspect as such or any of the previous implementation forms, the controller is configured to determine the soft values of all previous transmissions of the data packet already stored in the memory and to separately combine the soft values of the data packets with the soft values of each previous transmission of the data packet to obtain for each combination combined soft values. In this implementation form the error checking module is further configured to perform a CRC based on the combined soft values for each combination at least until a CRC for combined soft values of at least one of the combinations passes.

A second aspect of the present invention provides a method for decoding data packets comprising receiving a data packet containing a MAC header, soft decoding the data packet to obtain soft values of the data packet, performing a cyclic redundancy check, CRC, based on the soft values of the data packet, performing, if the CRC based on the soft values of the data packet failed, a first hard decision on the soft values of the data packet corresponding to the MAC header of the data packet, determining, based on the result of the first hard decision, whether soft values of a previous transmissions of the data packet are stored in a memory, combining said stored values with the soft values of the data packet to obtain combined soft values and performing a CRC based on the combined soft values.

The method of the present invention achieves the same advantages as described above for the receiver. The method may be carried out with additional method steps, which correspond to the functions carried out by the various implementation forms described above for the receiver.

A third aspect of the present invention provides a computer program comprising a program code for performing, when running on a computer, the method according to the second aspect of the present invention. The invention is carried out in accordance with the appended claims.

### BRIEF DESCRIPTION OF DRAWINGS

The above aspects and implementation forms of the present invention will be explained in the following description of specific embodiments in relation to the enclosed drawings, in which
Figure 1 shows a block diagram of a receiver according to an embodiment of the present invention.
Figure 2 shows block diagrams of a receiver according to an embodiment of the present invention.
Figure 3 shows a flow diagram of a method according to an embodiment of the present invention.
Figure 4 shows performance results of a receiver according to an embodiment of the present invention compared to a receiver of the state of the art.

### DETAILED DESCRIPTION OF EMBODIMENTS

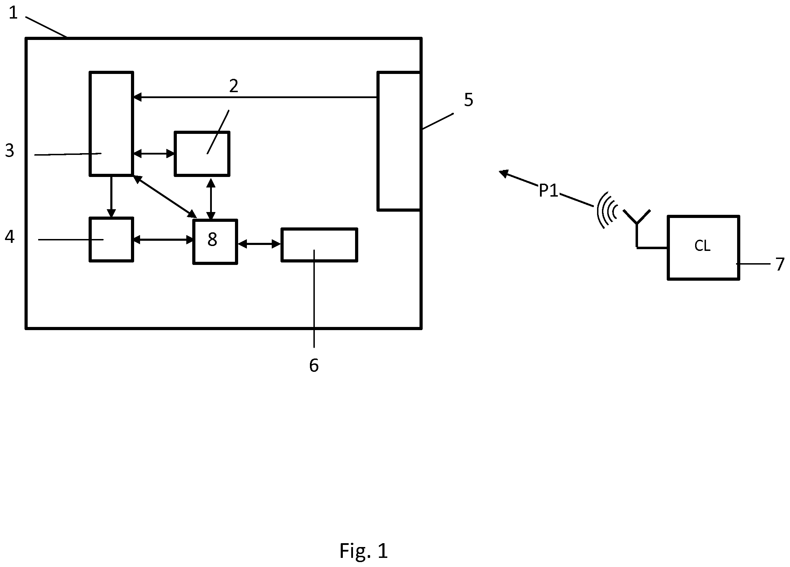

Figure 1 shows a receiver 1 according to an embodiment of the present invention for decoding data packets. The receiver 1 can be used with the 802.11 standard. In particular, the receiver 1 may implement a transparent HARQ mechanism into the 802.11 standard without modifying the standard or transmitters 7 using this standard. The receiver 1 may be a base station, an access point or a client in a network.

The receiver 1 of fig. 1 includes a receiving unit 5, which is configured to receive a data packet P1 from a transmitter 7. The transmitter 7 may, for example, be a terminal or client in a network. The receiving unit 5 of the receiver 1 may include one or more antennas. Multiple antennas of the receiving unit 5 may be aimed at different directions.

The receiver 1 further includes a soft decoder 3. The soft decoder 3 is configured to obtain the data packet P1 received by the receiving unit 5, and is further configured to soft decode the obtained data packet P1. In particular, the soft decoder 3 is configured to output soft values of the data packet PI, for instance soft values respective to data symbols (such as OFDM symbols) of the data packet P1. The soft decoder 3 may, for example, comprise a Log-Likelihood Ratio module that computes the soft values in form of LLRs of the data packet P1.

The receiver 1 further includes an error checking module 2, which is fed with the output of the soft decoder 3 (the soft values). The error checking module 2 is configured to perform a CRC based on the soft values produced by the soft decoder 3. Before performing the CRC, the error checking module 2 can perform FEC decoding on the soft values to derive bits corresponding to the soft values. These bits are used to perform the CRC on the data packet.

According to the 802.11 standard, the error checking module 2 preferably checks a single CRC for both the MAC header and the pay load data of the data packet P1. The error checking module 2 outputs either a "CRC pass" or a "CRC fail".

The receiver 1 further includes a hard decoder 4, which operates on the data packet P1, preferably only if the error checking module 2 outputs a "CRC fail". In this case of a "CRC fail", the soft values of the data packet PI, which are output by the soft decoder 3, are fed into the hard decoder 4. Preferably only the soft values corresponding to the MAC header of the data packet P1 are fed into the hard decoder 4. The result of the hard decision carried out by the hard decoder 4 is output to a controller 8 of the receiver 1.

The controller 8 of the receiver 1 may be a microprocessor or microcontroller. Each time the error checking module 2 outputs a "CRC fail" when checking a decoded data packet PI, the controller 8 is preferably able to store the soft values of the data packet P1 in a memory 6 of the receiver 1. Thereby, for each transmission of a data packet P1, the soft values may be stored separately in a memory 6 or in a separate memory. Alternatively, the soft values of consecutive (re)transmissions of the same data packet P1 may be summed, and stored as sum in the memory 6.

The controller 8 is configured to evaluate the hard decision performed on the soft values of the data packet P1, and in particular to parse respective fields of the MAC header for information like source address, target address and a retry field. Based on the information in these parsed fields, the controller 8 may then, for instance, determine, whether the data packet P1 was a retransmission or a new transmission. Further, the controller 8 may identify the transmitter 7 of the data packet P1, and may verify whether the receiver 1 was indeed the correct destination for the data packet P1. The controller 8 may then check, whether the memory 6 of the receiver 1 contains soft values from previous transmissions of the same data packet P1. In particular, the controller 8 may be configured to determine that previous soft values are stored in the memory 6, if there exists in the memory 6 a data packet P1, for which a hard decision of the stored soft values matches the bits corresponding to the MAC header of the currently received data packet P1, and preferably if further the retry field in the latter is set to "1". The hard decision on the stored soft values may be carried out by the hard decoder 4.

If the memory 6 contains older soft values of a previous transmission of the same data packet P1, the controller 8 is able to carry out soft value combining. If the soft values are LLRs, the controller 8 may carry out LLR combining as known in the state of the art. If the soft values are equalized symbols, the controller 8 may carry out MRC, EGC or the like. The controller 8 may in particular be able to test any of possible combinations of the LLR values or of the equalized symbols of the currently transmitted data packet P1 with the LLR values or equalized symbols, respectively, of previous transmissions of the same data packet P1. Each soft value combination may be checked by the error checking module 2, i.e. the controller 8 may cause the error checking module 2 to perform a further CRC based on each combination of soft values.

Before the CRC in the error checking module 2 is performed a FEC can be performed based on the combined soft values to derive bits which are then fed into the CRC. The FEC can be performed by an FEC module (which for example is part of the error checking module 2) of the receiver 1.

This process can be repeated for the different combinations of soft values, until the error checking module 2 outputs a "CRC pass".

When the CRC based on a soft value combination passes, the data packet can be correctly decoded. In this case, the controller 8 may be configured to further erase the soft values stored for the data packet P1 in the memory 6, because there is no further need for these soft values now that the data packet P1 is considered correctly decoded. The controller 8 may in this case also send an acknowledgement message to the transmitter 7 of the data packet P1, in order to prevent the transmitter 7 from still providing further retransmissions of the data packet P1.

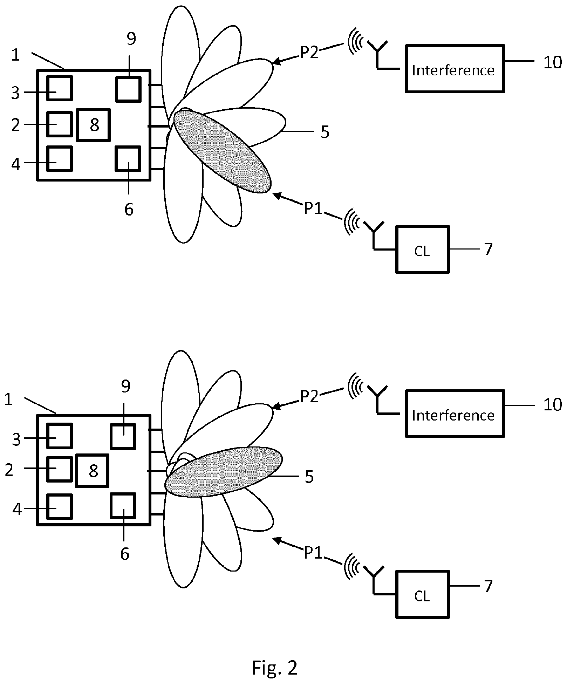

Figure 2 shows a receiver 1 according to a further embodiment of the present invention. The embodiment includes all modules, units and functions of the receiver 1 shown in fig. 1. The receiver 1 of fig. 2 may additionally determine collisions with other interfering data packets P2. The receiver 1 may also additionally apply a beam forming pattern to one or more antennas of its receiving unit 5, in order to suppress interferences, for instance caused by interfering data packets P2.

In order to determine, whether a collision occurs, the receiver 1 is equipped with a detecting unit 9. The detecting unit 9 is preferably configured to detect a collision with another data packet P2 by considering the rate of change over time of pilot subcarriers contained in symbols of the data packet P1. For example, if the pilot subcarriers change slowly over time, i.e. with a rate, which is below a pre-defined threshold, no collision is detected. However, if in one or more symbols of the data packet P1 the pilot subcarriers change rapidly over time, i.e. with a rate, which exceeds a pre-defined threshold, then the detecting unit 9 detects that a collision occurred during said symbols of the data packet P1. Preferably, such symbols of the data packet P1, during which a collision is detected, are not used for the above-described soft value combining, but are omitted. Only the soft values corresponding to symbols, during which no collision is detected, are preferably used in the soft value combining.

In order to determine a direction of interferences, in particular, a direction, from which an interfering data packet P2 arrives, and in order to suppress such interferences, the receiver 1 may apply one or more beam forming patterns to one or more antennas of the receiving unit 5. Further, the controller 8 of the receiver 1 may, for example, test the performance of the HARQ mechanism (i.e. particularly the soft value combining) with differently applied beam forming patterns. Each beam forming pattern may be aimed in a different direction, hence increasing the gain in that direction, and reducing the gain from other directions.

For instance, the upper illustration of fig. 2 shows a beam forming pattern applied in direction of a transmitter 7 of the data packet PI, for which soft value combining is to be carried out, and thus not applied in a direction of a further transmitter 10 sending an interfering data packet P2. In this case, interferences caused by the data packet P2 sent by the other transmitter 10 are mitigated. The lower illustration of fig. 2 shows a beam forming pattern not aimed in direction of the transmitter 7 of the data packet P1, but rather in direction of the other transmitter 10 of the other data packet P2, which causes the interference with the data packet P1. In this case, the interferences caused by the data packet P2 are strengthened. Thus, the direction of the interference may be determined by testing different beam forming patterns. The direction of the arriving interfering data packet P2 may also be detected otherwise, for example, by evaluating the energy distribution over the one or more antennas of the receiving unit 5.

The controller 8 may apply a beam forming pattern by multiplying each of the N receiving antennas of the receiving unit 5 by a different phase α, such that a combining vector for all receiving antennas is given by [e^{jα0} e^{jα1} ... e^{jαN-1}].

Preferably, in the receiver 1 of fig. 2, if the detecting unit 9 detects a collision during a symbol of a data packet P1, the controller 8 is configured to estimate the direction of arrival of the interference, i.e. the direction, from which the data packet P2 is received, and to employ a suitable beam forming pattern, in order to suppress interferences from the determined direction. Preferably, the suppression is only carried out for the relevant symbol of the data packet P1, i.e. during the time period of receiving said symbol. The combination of soft value combining with the applied beam forming pattern for suppressing interferences can significantly improve the overall receiver performance. In particular, the error rate can be reduced, because data packets P1 can be correctly decoded more reliably.

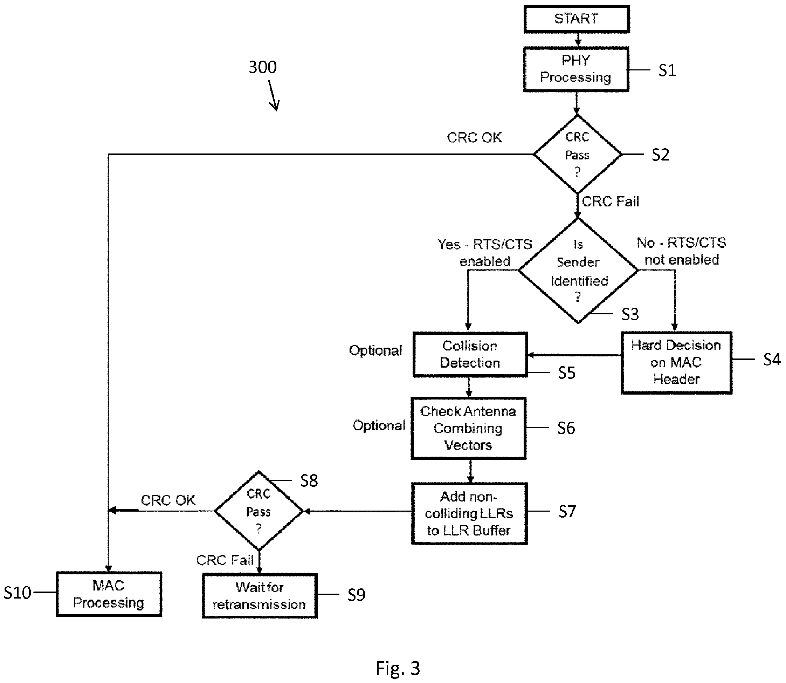

Figure 3 shows a flow diagram of a method 300 according to an embodiment of the present invention. In a first step S1, PHY processing is carried out on a received data packet P1. The data packet P1 may be received by the receiving unit 5 of the receiver 1. PHY processing includes a CRC based on at least the MAC header and the pay load of the data packet P1 (in form of bits derived from the soft values of the data packet PI). The CRC may be carried out by the error checking module 2 of the receiver 1. In step S2, the method determines, whether the CRC passed or failed, for example based on the output of the error checking module 2. If the CRC passed, the data packet P1 has been decoded correctly, and the method may forward to step S10, in which, for example, MAC processing is carried out on the data packet P1.

If the CRC in step S2 failed, in a next step S3, the method attempts to determine whether the sender, i.e. for example the transmitter 7, of the data packet P1 may be identified. The determination may be carried out by the controller 8 of the receiver 1. The transmitter 7 may, for example, be identified, if RTS/CTS are enabled. In this case the controller 8 may determine for certain, who the sender of the data packet P1 is, and to whom the data packet P1 was intended to be transmitted. However, RTS/CTS are not mandatory for the method of the present invention.

According to the method 300, even if RTS/CTS is not enabled, the relevant information about the transmitter 7 of the data packet P1, and whether the data packet P1 is a new transmission or a retransmission, may still be determined in step S4. In step S4, a hard decision is carried out on the soft values of the decoded data packet P1, preferably only on the soft values corresponding to the MAC header of the data packet 1. The hard decision may be carried out by the hard decoder 4. By comparing the result of the hard decision with another hard decision carried out on previously stored soft values, it may be determined, whether soft values of the same data packet P1 from one or more previous, preferably consecutive transmission of the data packet P1 are available, for instance stored in the memory 6 of the receiver 1. In case the transmitter 7 of the data packet has been identified in step S3, the determination, whether old soft values of the same data packet are available, does not require the hard decision step S4.

After the determination, the method continues with step S7, or optionally with step S5 and/or step S6.

In the optional step S5 it is detected, whether a collision occurred during receiving the data packet P1, for instance, with another interfering data packet P2. The detection may be carried out by the detecting unit 9 of the receiver 1 as explained above. Preferably, it may be determined for each symbol of the data packet P1, whether a collision occurred during receiving said symbol. Collisions are typically caused by hidden nodes (i.e. the transmitters 7 and 10 of the data packets P1 and P2, respectively, are not aware of each other), and may occur anywhere within a data packet P1.

In the second optional step S6, a beam forming pattern may be applied to one or more antennas of a receiving unit 5 of, for example, the receiver 1 as explained above. The beam forming patterns may be applied by the controller 8 of the receiver 1. The beam forming patterns are applied preferably, in order to suppress any detected interferences, for example, interferences caused by interfering data packets P2. The beam forming pattern may be applied only during symbols of the data packet P1, for which a collision was detected in step S5.

In step S7, the controller 8 combines the soft values, preferably LLR values, of the data packet P1, preferably only the soft values of symbols, during which no collision was detected in step S6, with soft values of the same data packet P1 of previous transmissions, if they exist, which are for instance stored in the memory 6 of the receiver 1. For each possible combination of the soft values, the method may further check in step S8, whether a soft value combination passes the CRC or fails the CRC. The CRC may be carried out by the error checking module 2 of the receiver 1. If in step S8 the CRC still fails for all possible soft value combinations, then the method waits for another retransmission of the data packet P1. Preferably, in this case, a retransmission may explicitly be requested by the receiver 1 from the transmitter 7 of the data packet P1. If in step S8 the CRC passes, then the method continues to step S10, and carries out, for example, MAC processing on the data packet P1.

The benefits of the method 300 and the receiver 1 are in particular achieved by employing the sophisticated HARQ mechanism. For example, an increased probability of correctly decoding a data packet P1 is obtained due to the combining of soft values. This also decreases the number of necessary retransmissions. Thus, the performance of the method 300 and receiver 1 is improved. Further, the HARQ mechanism reduces the latency, since fewer retransmissions are needed for a correct packet decoding. Improved cell edge data rates, due to the increased packet decoding probability, are also possible. Further, an increased efficiency due to a reduced medium utilization (because of a higher MCS and fewer retransmissions) is achieved. Finally, the robustness of the data packet decoding to time varying interferences and inter-symbol-interferences is improved. The HARQ mechanism is always possible due to the ability of the receiver 1 to make a hard decision in case of a CRC fail.

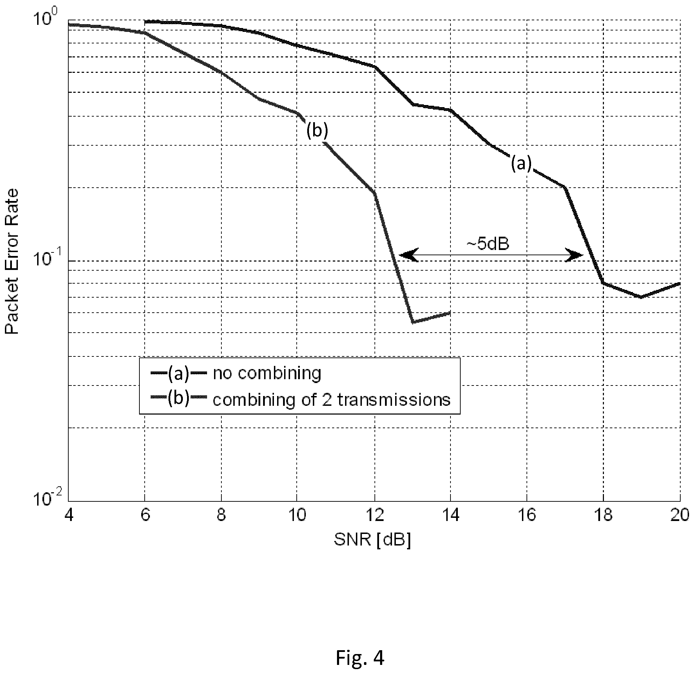

In fig. 4, the performance (curve b) of a receiver 1 according to embodiments of the present invention is compared to the performance (curve a) of a receiver of the prior art, which does not employ a HARQ mechanism, for example, a receiver typically used in the 802.11 standard. Figure 4 clearly shows the significant advantages of the present invention over the state of the art. In particular, at a packet error rate (PER) of 0.1 there is an approximate gap of 5 dB between a receiver 1 of the present invention and a receiver not utilizing HARQ.

In summary, the receiver 1 and the method 300 are able to implement a HARQ mechanism into the 802.11 standard, without modifying the standard or transmitters using said standard. Thereby, the advantages described are achieved and in particular the performance of transmission in the standard may be significantly improved.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. Receiver (1) for decoding data packets, the receiver (1) comprising:
a receiving unit (5), configured to receive a data packet (P1), the data packet (P1) containing a MAC header;
a soft decoder (3), configured to soft decode the data packet (P1) to obtain soft values of the data packet (P1),
an error checking module (2), configured to perform (S2) a cyclic redundancy check, CRC, based on the soft values of the data packet (P1),
a hard decoder (4), configured to perform (S4), if the CRC based on the soft values of the data packet (P1) failed, a first hard decision on the soft values of the data packet (P1) corresponding to the MAC header of the data packet (P1), and
a controller (8) configured to, based on the result of the first hard decision, determine whether soft values of a previous transmission of the data packet (P1) are stored in a memory (6) of the receiver and to combine (S7) said stored soft values with the soft values of the data packet (P1) to obtain combined soft values;
wherein the error checking module (2) is further configured to perform (S8) a CRC based on the combined soft values;
the receiver **characterised in that** the controller (8) is configured to parse the result of the first hard decision to determine at least a source address and a target address contained in the MAC header of the data packet (P1); and
wherein the controller (8) is further configured to decide that soft values of a previous transmission of the data packet (P1) are stored in the memory (6) if the determined source address and target address match a source address and a target address of a data packet soft values of which are already stored in the memory (6).

2. Receiver (1) according to claim 1,
wherein the controller (8) is configured to identify a transmitter (7) of the data packet (P1), and
wherein the controller (8) is configured to perform the determination whether soft values of a previous transmission of the data packet (P1) are stored in a memory (6) of the receiver based on the hard decision if the transmitter cannot be identified by the controller (8) and otherwise based on the result of the identification of the transmitter.

3. Receiver (1) according to claim 2,
wherein the hard decoder (4) is configured to perform the hard decision on the soft values if the transmitter (7) cannot be identified and otherwise to omit performing the hard decision.

4. Receiver (1) according to one of the claims 1 to 3, wherein the soft values are log-likelihood ratios, LLRs, or equalized symbols.

5. Receiver (1) according to claim 4, wherein
the controller (8) is configured to use LLR combining, if the soft values are LLRs, or to use maximum ratio combining, MRC, or equal gain combining, EGC, if the soft values are equalized symbols, to combine (S7) the soft values of the data packet with the stored soft values of the previous transmission of the data packet (P1).

6. Receiver according to claim 4 or 5,
wherein the soft decoder (3) is configured to obtain LLRs corresponding to pay load bits of the data packet (P1) and LLRs corresponding to parity bits of the data packet (P1), if the soft values are LLRs; and
wherein the hard decoder (4) is configured to perform the first hard decision on the LLRs corresponding to the pay load bits and the LLRs corresponding to the parity bits.

7. Receiver (1) according to one of the claims 1 to 6,
wherein the hard decoder (4) is configured to perform a second hard decision on the stored soft values, and
wherein the controller (8) is configured to compare the result of the first hard decision with the result of the second hard decision, and to decide that stored soft values belong to a previous transmission of the data packet (P1), if the results of the first hard decision and the second hard decision match.

8. Receiver (1) according to claim 7,
wherein the controller (8) is configured to parse the result of the first hard decision, in order to determine at least a value of a retry field contained in the MAC header of the data packet (P1), and to decide that stored soft values belong to a previous transmission of the data packet (P1), if the results of the first hard decision and the second hard decision match, and if the value of the retry field indicates a retransmission.

9. Receiver (1) according to one of the claims 1 to 8, further comprising
a detecting unit (9) for detecting, whether a collision with an interfering data packet (P2) occurred while receiving the data packet (P1),
wherein the controller (8) is configured to use only soft values of the data packet (P1) corresponding to symbols of the data packet (P1), during which no collision is detected for combining (S7) the soft values of the data packet (P1) with the stored soft values of the previous transmission of the data packet (P1).

10. Receiver (1) according to claim 9,
wherein the detecting unit (9) is configured to decide that the collision occurred in a symbol of the data packet, if pilot subcarriers in the symbol change with a rate which exceeds a pre-defined threshold.

11. Receiver (1) according to one of the claims 1 to 10, wherein,
the controller (8) is configured to determine a direction from which an interfering data packet (P2) is transmitted, and to apply a beam forming pattern in dependence on the determined direction to one or more antennas of the receiving unit (5).

12. Receiver (1) according to the claims 9 or 10 and to claim 11, wherein
the controller (8) is configured to apply the beam forming pattern to the one or more antennas during each symbol of the data packet (P1), for which a collision with an interfering data packet (P2) is detected.

13. Method for decoding data packets comprising:
receiving a data packet (P1) containing a MAC header,
soft decoding, the data packet (P1) to obtain soft values of the data packet (P1),
performing (S2) a cyclic redundancy check, CRC, based on the soft values of the data packet (P1),
performing (S4), if the CRC based on the soft values of the data packet failed, a first hard decision on the soft values of the data packet (P1) corresponding to the MAC header of the data packet (P1),
determining, based on the result of the first hard decision, whether soft values of a previous transmissions of the data packet (P1) are stored in a memory (6),
combining (S7) said stored values with the soft values of the data packet (P1) to obtain combined soft values and
performing (S8) a CRC based on the combined soft values;
the method **characterised in that** the determining, based on the result of the first hard decision, whether soft values of a previous transmissions of the data packet (P1) are stored in a memory comprises:
parsing the result of the first hard decision to determine at least a source address and a target address contained in the MAC header of the data packet (P1); and
deciding that soft values of a previous transmission of the data packet (P1) are stored in the memory if the determined source address and target address match a source address and a target address of a data packet soft values of which are already stored in the memory.

14. A computer program comprising a program code which, when running on a computer, cause the computer to carry out the method according to claim 13.

## Patentansprüche

1. Empfänger (1) zur Decodierung von Datenpaketen, wobei der Empfänger (1) Folgendes umfasst:
eine Empfangseinheit (5), die zum Empfangen eines Datenpaketes (P1) konfiguriert ist, wobei das Datenpaket (P1) eine MAC-Kopfzeile enthält;
einen weichen Decoder (3), der zum weichen Decodieren des Datenpaketes (P1) zum Erhalten weicher Werte des Datenpaketes (P1) konfiguriert ist,
ein Fehlerprüfmodul (2), das zum Durchführen (S2) einer cyclischen Redundanzprüfung, CRC - *Cyclic Redundancy Check,* basierend auf den weichen Werten des Datenpaketes (P1) konfiguriert ist,
einen harten Decoder (4), der, wenn die CRC basierend auf den weichen Werten des Datenpaketes (P1) fehlgeschlagen ist, zum Durchführen (S4) einer ersten harten Entscheidung an den weichen Werten des Datenpaketes (P1) entsprechend der MAC-Kopfzeile des Datenpaketes (P1) konfiguriert ist, und
einen Controller (8), der, basierend auf dem Ergebnis der ersten harten Entscheidung, zum Bestimmen, ob weiche Werte einer vorhergehenden Übertragung des Datenpaketes (P1) in einem Speicher (6) des Empfängers gespeichert sind, und zum Kombinieren (S7) der gespeicherten weichen Werte mit den weichen Werten des Datenpaketes (P1) zum Erhalten kombinierter weicher Werte konfiguriert ist;
wobei das Fehlerprüfmodul (2) ferner zum Durchführen (S8) einer CRC basierend auf den kombinierten weichen Werten konfiguriert ist;
wobei der Empfänger **dadurch gekennzeichnet ist, dass**
der Controller (8) zum Parsen des Ergebnisses der ersten harten Entscheidung zum Bestimmen mindestens einer Quelladresse und einer Zieladresse, die in der MAC-Kopfzeile des Datenpaketes (P1) enthalten sind, konfiguriert ist; und
wobei der Controller (8) ferner zum Entscheiden, dass weiche Werte einer vorhergehenden Übertragung des Datenpaketes (P1) in dem Speicher (6) gespeichert sind, wenn die bestimmte Quelladresse und Zieladresse mit einer Quelladresse und einer Zieladresse eines Datenpaketes übereinstimmen, für welches bereits weiche Werte in dem Speicher (6) gespeichert sind, konfiguriert ist.

2. Empfänger (1) nach Anspruch 1,
wobei der Controller (8) zum Identifizieren eines Senders (7) des Datenpaketes (P1) konfiguriert ist, und
wobei der Controller (8) zum Durchführen der Bestimmung, ob weiche Werte einer vorhergehenden Übertragung des Datenpaketes (P1) in einem Speicher (6) des Empfängers gespeichert sind, basierend auf der harten Entscheidung, wenn der Sender nicht durch den Controller (8) identifiziert werden kann, und ansonsten basierend auf dem Ergebnis der Identifizierung des Senders konfiguriert ist.

3. Empfänger (1) nach Anspruch 2,
wobei der harte Decoder (4) zum Durchführen der harten Entscheidung an den weichen Werten, wenn der Sender (7) nicht identifiziert werden kann, und ansonsten zum Weglassen des Durchführens der harten Entscheidung konfiguriert ist.

4. Empfänger (1) nach einem der Ansprüche 1 bis 3,
wobei die weichen Werte "Log-Likelihood"-Verhältnisse, LLRs - *Log-Likelihood Ratios*, oder angeglichene Symbole sind.

5. Empfänger (1) nach Anspruch 4,
wobei der Controller (8) zum Verwenden von LLR-Kombination, wenn die weichen Werte LLRs sind, oder zum Verwenden von Maximalverhältniskombination, MRC - *Maximum Ratio Combining*, oder Gleichverstärkungskombination, EGC - *Equal Gain Combining*, wenn die weichen Werte angeglichene Symbole sind, zum Kombinieren (S7) der weichen Werte des Datenpaketes mit den gespeicherten weichen Werten der vorhergehenden Übertragung des Datenpaketes (P1) konfiguriert ist.

6. Empfänger nach Anspruch 4 oder 5,
wobei der weiche Decoder (3) zum Erhalten von LLRs entsprechend Nutzdatenbits des Datenpaketes (P1) und von LLRs entsprechend Paritätsbits des Datenpaketes (P1), wenn die weichen Werte LLRs sind, konfiguriert ist; und
wobei der harte Decoder (4) zum Durchführen der ersten harten Entscheidung an den LLRs entsprechend der Nutzdatenbits und an den LLRs entsprechend der Paritätsbits konfiguriert ist.

7. Empfänger (1) nach einem der Ansprüche 1 bis 6,
wobei der harte Decoder (4) zum Durchführen einer zweiten harten Entscheidung an den gespeicherten weichen Werten konfiguriert ist, und
wobei der Controller (8) zum Vergleichen des Ergebnisses der ersten harten Entscheidung mit dem Ergebnis der zweiten harten Entscheidung und zum Entscheiden, dass gespeicherte weiche Werte zu einer vorhergehenden Übertragung des Datenpaketes (P1) gehören, wenn die Ergebnisse der ersten harten Entscheidung und der zweiten harten Entscheidung übereinstimmen, konfiguriert ist.

8. Empfänger (1) nach Anspruch 7,
wobei der Controller (8) zum Parsen des Ergebnisses der ersten harten Entscheidung zum Bestimmen mindestens eines Wertes eines Wiederholungsfeldes, das in der MAC-Kopfzeile des Datenpaketes (P1) enthalten ist, und zum Entscheiden, dass gespeicherte weiche Werte zu einer vorhergehenden Übertragung des Datenpaketes (P1) gehören, wenn die Ergebnisse der ersten harten Entscheidung und der zweiten harten Entscheidung übereinstimmen und wenn der Wert des Wiederholungsfeldes eine Neuübertragung angibt, konfiguriert ist.

9. Empfänger (1) nach einem der Ansprüche 1 bis 8, welcher ferner Folgendes umfasst:
eine Erkennungseinheit (9) zum Erkennen, ob eine Kollision mit einem störenden Datenpaket (P2) während des Empfangs des Datenpaketes (P1) stattgefunden hat,
wobei der Controller (8) zum Verwenden nur weicher Werte des Datenpaketes (P1) entsprechend Symbolen des Datenpaketes (P1), während welcher keine Kollision erkannt wird, zum Kombinieren (S7) der weichen Werte des Datenpaketes (P1) mit den gespeicherten weichen Werten der vorhergehenden Übertragung des Datenpaketes (P1) konfiguriert ist.

10. Empfänger (1) nach Anspruch 9,
wobei die Erkennungseinheit (9) zum Entscheiden, dass die Kollision in einem Symbol des Datenpaketes stattgefunden hat, wenn sich Pilotunterträger in dem Symbol mit einer Geschwindigkeit ändern, welche eine vordefinierte Schwelle übersteigt, konfiguriert ist.

11. Empfänger (1) nach einem der Ansprüche 1 bis 10,
wobei der Controller (8) zum Bestimmen einer Richtung, aus welcher ein störendes Datenpaket (P2) gesendet wird, und zum Anwenden eines Strahlformungsmusters in Abhängigkeit von der bestimmten Richtung auf eine oder mehrere Antennen der Empfangseinheit (5) konfiguriert ist.

12. Empfänger (1) nach Anspruch 9 oder 10 und Anspruch 11,
wobei der Controller (8) zum Anwenden des Strahlformungsmusters auf die eine oder die mehreren Antennen während jedes Symbols des Datenpaketes (P1), für welches eine Kollision mit einem störenden Datenpaket (P2) erkannt wird, konfiguriert ist.

13. Verfahren zur Decodierung von Datenpaketen, welches Folgendes umfasst:
Empfangen eines Datenpaketes (P1), welches eine MAC-Kopfzeile enthält,
weiches Decodieren des Datenpaketes (P1) zum Erhalten weicher Werte des Datenpaketes (P1),
Durchführen (S2) einer cyclischen Redundanzprüfung, CRC - *Cyclic Redundancy Check*, basierend auf den weichen Werten des Datenpaketes (P1),
wenn die CRC basierend auf den weichen Werten des Datenpaketes fehlgeschlagen ist, Durchführen (S4) einer ersten harten Entscheidung an den weichen Werten des Datenpaketes (P1) entsprechend der MAC-Kopfzeile des Datenpaketes (P1),
Bestimmen, basierend auf dem Ergebnis der ersten harten Entscheidung, ob weiche Werte einer vorhergehenden Übertragung des Datenpaketes (P1) in einem Speicher (6) gespeichert sind,
Kombinieren (S7) der gespeicherten weichen Werte mit den weichen Werten des Datenpaketes (P1) zum Erhalten kombinierter weicher Werte, und
Durchführen (S8) einer CRC basierend auf den kombinierten weichen Werten;
wobei das Verfahren **dadurch gekennzeichnet ist, dass**
das Bestimmen, basierend auf dem Ergebnis der ersten harten Entscheidung, ob weiche Werte einer vorhergehenden Übertragung des Datenpaketes (P1) in einem Speicher gespeichert sind, Folgendes umfasst:
Parsen des Ergebnisses der ersten harten Entscheidung zum Bestimmen mindestens einer Quelladresse und einer Zieladresse, die in der MAC-Kopfzeile des Datenpaketes (P1) enthalten sind; und
Entscheiden, dass weiche Werte einer vorhergehenden Übertragung des Datenpaketes (P1) in dem Speicher gespeichert sind, wenn die bestimmte Quelladresse und Zieladresse mit einer Quelladresse und einer Zieladresse eines Datenpaketes übereinstimmen, für welches bereits weiche Werte in dem Speicher gespeichert sind.

14. Computerprogramm, welches einen Programmcode umfasst, welcher, wenn er auf einem Computer läuft, den Computer zum Ausführen des Verfahrens nach Anspruch 13 veranlasst.

## Revendications

1. Récepteur (1) pour le décodage de paquets de données, le récepteur (1) comprenant :
une unité de réception (5), configurée pour recevoir un paquet de données (P1), le paquet de données (P1) contenant un en-tête MAC ;
un décodeur à décision pondérée (3), configuré pour un décodage pondéré du paquet de données (P1) pour obtenir des valeurs pondérées du paquet de données (P1),
un module de détection d'erreur (2), configuré pour réaliser (S2) un contrôle par redondance cyclique, CRC, sur la base des valeurs pondérées du paquet de données (P1),
un décodeur à décision ferme (4), configuré pour réaliser (S4), si le CRC basé sur les valeurs pondérées du paquet de données (P1) échoue, une première décision ferme sur les valeurs pondérées du paquet de données (P1) correspondant à l'en-tête MAC du paquet de données (P1), et
un contrôleur (8) configuré pour, sur la base du résultat de la première décision ferme, déterminer si des valeurs pondérées d'une transmission précédente du paquet de données (P1) sont stockées dans une mémoire (6) du récepteur et pour combiner (S7) lesdites valeurs pondérées stockées avec les valeurs pondérées du paquet de données (P1) pour obtenir des valeurs pondérées combinées ;
le module de détection d'erreur (2) étant en outre configuré pour réaliser (S8) un CRC sur la base des valeurs pondérées combinées ;
le récepteur étant **caractérisé en ce que**
le contrôleur (8) est configuré pour analyser le résultat de la première décision ferme pour déterminer au moins une adresse source et une adresse cible contenues dans l'en-tête MAC du paquet de données (P1) ; et
le contrôleur (8) étant en outre configuré pour décider que des valeurs pondérées d'une transmission précédente du paquet de données (P1) sont stockées dans la mémoire (6) si l'adresse source et l'adresse cible déterminées correspondent à une adresse source et à une adresse cible d'un paquet de données dont les valeurs pondérées sont déjà stockées dans la mémoire (6).

2. Récepteur (1) selon la revendication 1,
le contrôleur (8) étant configuré pour identifier un émetteur (7) du paquet de données (P1), et
le contrôleur (8) étant configuré pour réaliser la détermination que des valeurs pondérées d'une transmission précédente du paquet de données (P1) sont stockées ou non dans une mémoire (6) du récepteur sur la base de la décision ferme si l'émetteur ne peut être identifié par le contrôleur (8) et, autrement, sur la base du résultat de l'identification de l'émetteur.

3. Récepteur (1) selon la revendication 2,
le décodeur à décision ferme (4) étant configuré pour réaliser la décision ferme sur les valeurs pondérées si l'émetteur (7) ne peut pas être identifié et, autrement, pour ne pas réaliser la décision ferme.

4. Récepteur (1) selon l'une des revendications 1 à 3, les valeurs pondérées étant des logarithmes de rapport de vraisemblance, LLR, ou des symboles égalisés.

5. Récepteur (1) selon la revendication 4,
le contrôleur (8) étant configuré pour utiliser une combinaison de LLR, si les valeurs pondérées sont des LLR, ou pour utiliser une combinaison à rapport maximal, MRC, ou une combinaison de gain égal, EGC, si les valeurs pondérées sont des symboles égalisés, pour combiner (S7) les valeurs pondérées du paquet de données avec les valeurs pondérées stockées de la transmission précédente du paquet de données (P1).

6. Récepteur selon la revendication 4 ou 5,
le décodeur à décision pondérée (3) étant configuré pour obtenir des LLR correspondant à des bits de données utiles du paquet de données (P1) et des LLR correspondant à des bits de parité du paquet de données (P1), si les valeurs pondérées sont des LLR ; et
le décodeur à décision ferme (4) étant configuré pour réaliser la première décision ferme sur les LLR correspondant aux bits de données utiles et les LLR correspondant aux bits de parité.

7. Récepteur (1) selon l'une des revendications 1 à 6,
le décodeur à décision ferme (4) étant configuré pour réaliser une seconde décision ferme sur les valeurs pondérées stockées, et
le contrôleur (8) étant configuré pour comparer le résultat de la première décision ferme avec le résultat de la seconde décision ferme, et pour décider que des valeurs pondérées stockées appartiennent à une transmission précédente du paquet de données (P1), si les résultats de la première décision ferme et de la seconde décision ferme correspondent.

8. Récepteur (1) selon la revendication 7,
le contrôleur (8) étant configuré pour analyser le résultat de la première décision ferme, afin de déterminer au moins une valeur d'un champ de nouvelle tentative contenu dans l'en-tête MAC du paquet de données (P1), et pour décider que des valeurs pondérées stockées appartiennent à une transmission précédente du paquet de données (P1), si les résultats de la première décision ferme et de la seconde décision ferme correspondent, et si la valeur du champ de nouvelle tentative indique une retransmission.

9. Récepteur (1) selon l'une des revendications 1 à 8, comprenant en outre
une unité de détection (9) pour détecter qu'une collision avec un paquet de données de brouillage (P2) s'est produite pendant la réception du paquet de données (P1),
le contrôleur (8) étant configuré pour n'utiliser que des valeurs pondérées du paquet de données (P1) correspondant aux symboles du paquet de données (P1), pendant lesquels aucune collision n'est détectée pour combiner (S7) les valeurs pondérées du paquet de données (P1) avec les valeurs pondérées stockées de la transmission précédente du paquet de données (P1).

10. Récepteur (1) selon la revendication 9,
l'unité de détection (9) étant configurée pour décider que la collision s'est produite dans un symbole du paquet de données, si les sous-porteuses pilotes dans le symbole changent avec un débit qui dépasse un seuil prédéfini.

11. Récepteur (1) selon l'une des revendications 1 à 10,
le contrôleur (8) étant configuré pour déterminer une direction à partir de laquelle un paquet de données de brouillage (P2) est transmis, et pour appliquer un motif de formation de faisceau en fonction de la direction déterminée à une ou plusieurs antennes de l'unité réceptrice (5).

12. Récepteur (1) selon la revendication 9 ou 10 et selon la revendication 11,
le contrôleur (8) étant configuré pour appliquer le motif de formation de faisceau aux une ou plusieurs antennes pendant chaque symbole du paquet de données (P1), pour lequel une collision avec un paquet de données de brouillage (P2) est détectée.

13. Procédé pour le décodage de paquets de données comprenant :
la réception d'un paquet de données (P1) contenant un en-tête MAC,
le décodage pondéré du paquet de données (P1) pour obtenir des valeurs pondérées du paquet de données (P1),
la réalisation (S2) d'un contrôle par redondance cyclique, CRC, basé sur les valeurs pondérées du paquet de données (P1),
la réalisation (S4), si le CRC basé sur les valeurs pondérées du paquet de données échoue, d'une première décision ferme sur les valeurs pondérées du paquet de données (P1) correspondant à l'en-tête MAC du paquet de données (P1),
la détermination, sur la base du résultat de la première décision ferme, que des valeurs pondérées d'une transmission précédente du paquet de données (P1) sont stockées dans une mémoire (6),
la combinaison (S7) desdites valeurs stockées avec les valeurs pondérées du paquet de données (P1) pour obtenir des valeurs pondérées combinées et
la réalisation (S8) d'un CRC basé sur les valeurs pondérées combinées ;
le procédé étant **caractérisé en ce que**
la détermination, sur la base du résultat de la première décision ferme, que des valeurs pondérées d'une transmission précédente du paquet de données (P1) sont stockées ou non dans une mémoire comprend :
l'analyse du résultat de la première décision ferme pour déterminer au moins une adresse source et une adresse cible contenues dans l'en-tête MAC du paquet de données (P1) ; et
la décision que des valeurs pondérées d'une transmission précédente du paquet de données (P1) sont stockées dans la mémoire si l'adresse source et l'adresse cible déterminées correspondent à une adresse source et à une adresse cible d'un paquet de données dont les valeurs pondérées sont déjà stockées dans la mémoire.

14. Programme informatique comprenant un code de programme qui, lorsqu'il est exécuté sur un ordinateur, amène l'ordinateur à réaliser le procédé selon la revendication 13.
